# EUROPEAN PATENT APPLICATION

(11) **EP 1 320 272 A2**
(43) Date of publication of application: **18.06.2003**
(21) Application number: 02028269.5
(22) Date of filing: 16.12.2002
(51) Int. Cl.: H04Q 7/32

(54) **Mobile communication terminal**

(30) Priority: 17.12.2001 JP 2001383379
(71) Applicant: Kabushiki Kaisha Toshiba, Tokyo (JP)
(72) Inventor: Nishimura, Hiroaki, Kabushiki Kaisha Toshiba, Tokyo 105-8001 (JP)
(74) Representative: Henkel, Feiler, Hänzel

(57) **Abstract**

An encryption section (21) encrypts arbitrary information based on specific information stored in an external storage medium (C1). When information is to be stored in a storage section (6, C2) other than the external storage medium (C1), a storage control section (4a) causes the encryption section (21) to encrypt the information and the storage section (6, C2) to store the encrypted information. A decryption section (21) decrypts the encrypted information based on the specific information stored in the external storage medium (C1). When the encrypted information stored in the storage section (6, C2) is to be read, a read control section (4b) causes the decryption section (21) to decrypt the encrypted information read from the storage section (6, C2).

## Description

The present invention relates to a mobile communication terminal, such as a mobile telephone.

A mobile communication terminal using a SIM (Subscriber Identity Module) card is known. In this type of mobile communication terminal, security is provided for data to be stored in the memory of the SIM card. This is known from, for example, Jpn. Pat. Appln. KOKAI Publication No. 11-252248.

Conventionally, however, no security is provided for data stored in a storage medium other than the SIM card. Therefore, anyone can easily obtain the data stored in, for example, a memory incorporated in a mobile communication terminal.

Thus, in the conventional mobile communication terminal using an external storage medium such as the SIM card, which stores subscriber information, security is provided only for the data stored in the external storage medium, whereas the data stored in the internal memory or the like is not protected.

The present invention has been made in consideration of the above situations, and has as its object to provide a mobile communication terminal capable of protecting data stored in a storage medium other than an external storage medium storing subscriber information.

According to an aspect of the present invention, there is provided a mobile communication terminal, to which an external storage medium storing subscriber information can be arbitrarily attached and which can carry out communication as a terminal of a subscriber corresponding to the subscriber information stored in the attached external memory medium, the mobile communication terminal comprising: encryption means for encrypting arbitrary information based on specific information stored in the attached external storage medium; decryption means for decrypting the encrypted information based on the specific information stored in the attached external storage medium; writing means for writing the encrypted information in storage means other than the attached external storage medium; and acquiring means for acquiring the decrypted information as read-out information read from the storage means, the decrypted information being obtained by decrypting the encrypted information stored in the storage means.

According to another aspect of the present invention, there is provided a mobile communication terminal, to which an external storage medium storing subscriber information can be arbitrarily attached and which can carry out communication as a terminal of a subscriber corresponding to the subscriber information stored in the attached external memory medium, the mobile communication terminal comprising: management means for managing information stored in storage means other than the attached external storage medium in association with specific information stored in the attached external storage medium when the information was written in the storage means; and reading means for reading from the storage means only the information managed by the management means in association with the specific information stored in the attached external storage medium.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram of a mobile telephone according to a first embodiment of the present invention;
FIG. 2 is a flowchart of a data storing process according to the first embodiment;
FIG. 3 is a flowchart of a data reading process according to the first embodiment;
FIG. 4 is a block diagram of a mobile telephone according to a second embodiment of the present invention;
FIG. 5 is a flowchart of a data storing process according to the second embodiment; and
FIG. 6 is a flowchart of a data reading process according to the second embodiment.

Embodiments of the present invention will now be described with reference to the accompanying drawings.

### (First Embodiment)

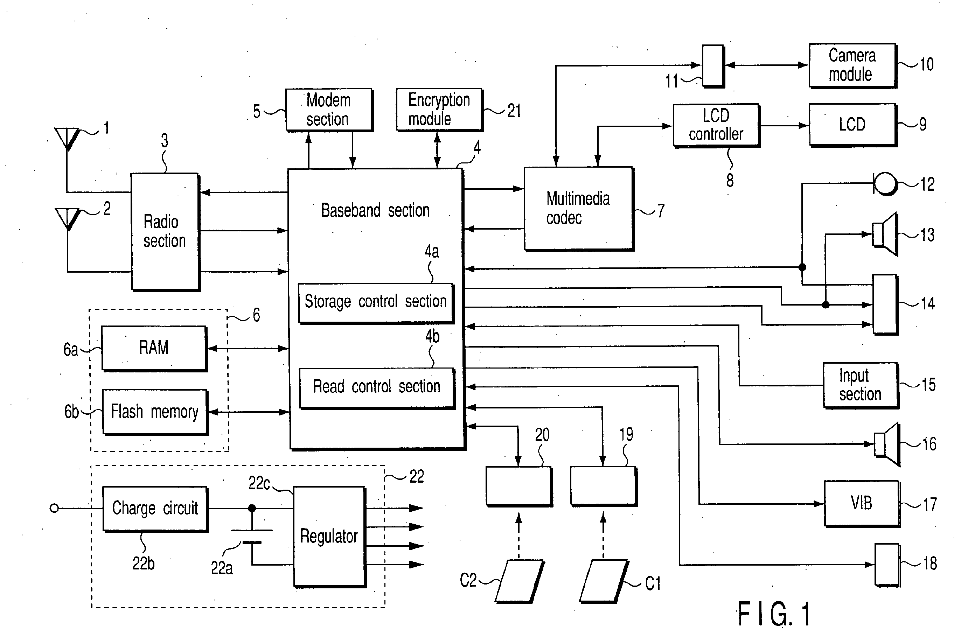

FIG. 1 is a block diagram of a mobile telephone according to a first embodiment of the present invention.

As shown in FIG. 1, the mobile telephone of the first embodiment comprises a main antenna 1, a sub-antenna 2, a radio section 3, a baseband section 4, a modem section 5, a memory section 6, a multimedia codec 7, an LCD controller 8, an LCD 9, a camera module 10, a camera interface connector 11, a microphone 12, a receiver 13, a stereo headset jack 14, an input section 15, a sounder 16, a vibrator 17, a USB interface connector 18, a SIM card connector 19, a memory card connector 20, an encryption module 21 and a power source section 22.

The radio section 3 comprises a transmitting section, a duplexer, an isolator and two channel receiving sections, though they are not shown. The. radio section 3 subjects a transmission signal (an HPSK modulation signal) output from the baseband section 4 to quadrature modulation, up-conversion and power amplification. Then, it supplies the resultant transmission signal to the main antenna 1 through the duplexer and the isolator. The transmission signal is output to a base station (not shown) through the main antenna 1. The transmitting section can perform transmission gain control with high precision. In the radio section 3, a radio signal transmitted from the base station (not shown) is received by the main antenna 1 and the sub-antenna 2, with the result that two-channel reception signals are obtained. The two-channel reception signals are subjected to down-conversion and quadrature demodulation respectively in the two channel receiving sections, and supplied to the baseband section 4. The up-conversion in the transmitting section and the down-conversion in the receiving sections are performed by using a local signal generated by a synthesizer section (not shown).

The baseband section 4 is formed of an LSI. The baseband section 4 has a function for performing base band signal processing with respect to the transmission signals supplied to the radio section 3 and the reception signals supplied from the radio section 3. The baseband section 4 also has a function for performing control processing, such as communication control and peripheral circuit control. It also has a function of performing voice encoding and decoding.

The modem section 5 is formed of an LSI. It modulates the transmission signals and demodulates the reception signals.

The memory section 6 has a RAM 6a and a flash memory 6b. The RAM 6a and the flash memory 6b are mounted in the mobile telephone so as not be easily detached therefrom. The memory section 6 stores various kinds of data, such as various setting information, reception data and transmission data generated by the mobile telephone.

The multimedia codec 7 is formed of an LSI. The LSI includes three dedicated-purpose processor cores, hard logic cores for the respective processes, and a 16-Mbit SDRAM shared by the three dedicated-purpose processor cores. The multimedia codec 7 implements MPEG-4/H.324 (Annex C) in cooperation with MPEG-4/H.324 (Annex C) control software. As a result, the multimedia codec 7 carries out an MPEG-4 video encoding and decoding, audio/video encoding and decoding, and H.223 demultiplexing.

The LCD controller 8 is formed of an LSI. The LCD controller 8 subjects image data supplied from the multimedia codec 7 to processing for, for example, character synthesis. The LCD controller 8 also drives the LCD 9.

The LCD 9 is, for example, a reflective color liquid crystal display. The LCD 9 displays a desired image under the control of the LCD controller 8. The LCD 9 displays an image transmitted from another terminal and an image transmitted from the terminal itself. In addition, the LCD displays an image indicating a state of the terminal and desired information to be transmitted to another use.

The camera module 10 can be arbitrarily attached to the camera interface connector 11. The camera module 10 takes a picture of a desired object, and generates image data. The camera module 10 supplies the generated image data to the multimedia codec 7 through the camera interface connector 11.

The microphone 12 converts an ambient sound, including a transmission voice produced by the user, to an electric signal. The microphone 12 supplies the electric signal to the baseband section 4 as a transmission voice signal.

The receiver 13 outputs a sound based on the reception voice signal or audio signal supplied from the baseband section 4.

The stereo headset jack 14 is used to connect the mobile telephone to a stereo headset (not shown). When the stereo headset jack 14 is connected to the headset, it supplies a transmission signal output from the headset to the baseband section 4 and a reception voice signal or audio signal output from the baseband section 4 to the headset.

The input section 15 has a key group including dial keys, a transmission key, a power key, an end key, a sound level adjusting key, a mode designating key, etc. The user's instructions are input to the input section 15 through depression of these keys.

The sounder 16 outputs a ringer tone and a key verification tone under the control of the baseband section 4.

The vibrator 17 carries out a vibration operation for notifying an incoming call under the control of the baseband section 4.

An external device can be arbitrarily connected to the USB interface connector 18. Data can be exchanged between the external device connected to the USB interface connector 18 and the baseband section 4.

An SIM card C1 can be arbitrarily inserted into the SIM card connector 19. The SIM card C1 inserted in the SIM card connector 19 can be accessed by the baseband section 4.

A general-purpose memory card C2 can be arbitrarily inserted into the memory card connector 20. The memory card C2 inserted in the memory card connector 20 can be accessed by the baseband section 4.

The encryption module 21 encrypts data and decrypts encrypted data by means of a key notified of by the baseband section 4.

The power source section 22 includes an ALB battery 22a, a charge circuit 22b and a regulator 22c. The power source section 22 supplies necessary power to the respective sections. It also has a function for transmitting a reset signal to the overall system when the power source voltage lowers below a predetermined level, and a function for backing up the RAM 6a.

The baseband section 4 operates as a storage control section 4a and a read control section 4b, not only as a control section for carrying out a control process to implement known general functions in a mobile telephone, such as a voice transmitting function.

The storage control section 4a performs a data storing process (to be described later) to store data in the memory section 6 or the memory card C2. The read control section 4b performs a data reading process (to be described later) to read data from the memory section 6 or the memory card C2.

An operation of the mobile telephone having the above structure will now be described. Since the process to implement known general functions in a mobile telephone, such as a voice transmitting function, is the same as the conventional process, the description thereof is omitted. In the following, an operation concerning access to memory section 6 or the memory card C2 will be described in detail.

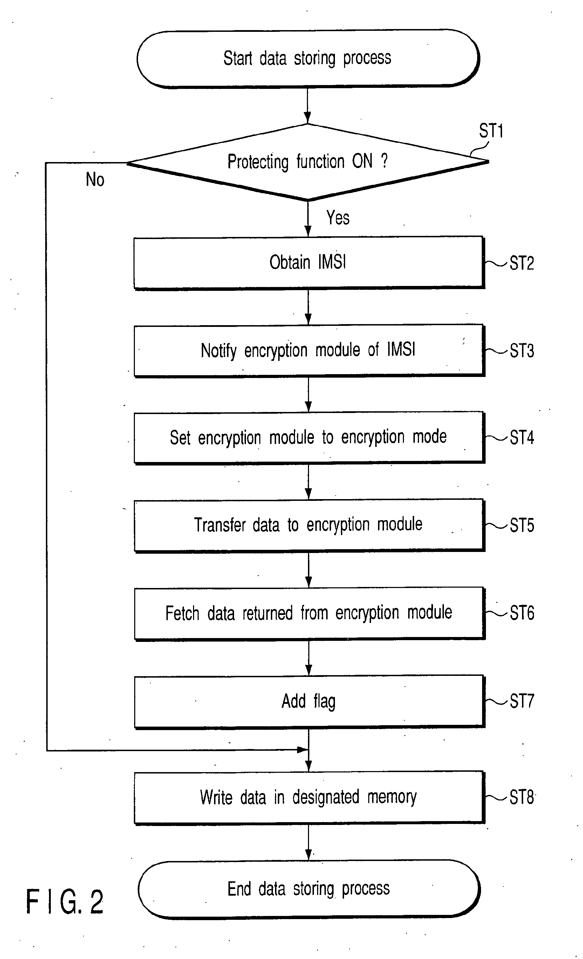

If it is necessary to store data in the memory section 6 or the memory card C2 during execution of an arbitrary application process, the baseband section 4 executes a data storing process shown in FIG. 2 as another task process.

In a step ST1, the baseband section 4 checks whether a protecting function is set ON. If the baseband section 4 checks that the protecting function is set ON, it obtains IMSI from the SIM card C1 in a step ST2. IMSI is card-specific information set for every SIM card C1.

Subsequently, the baseband section 4 notifies the encryption module 21 of the IMSI in a step ST3. Then, the baseband section 4 sets the encryption module 21 to an encryption mode in a step ST4. In a step ST5, the baseband section 4 transfers data to be stored to the encryption module 21.

When the encryption mode is set, the encryption module 21 encrypts the data transferred from the baseband section 4 using the IMSI notified of by the baseband section 4. Then, the encryption module 21 returns the encrypted data to the baseband section 4.

In a step ST6, the baseband section 4 fetches the data sent back from the encryption module 21 as described above. Subsequently, in a step ST7, the' baseband section 4 adds a flag to the data fetched in the step ST6. The flag represents that the data is encrypted.

In a step ST8, the baseband section 4 writes the flag-added data into a memory designated as a target. When the writing of the data into the memory is completed, the baseband section 4 ends the data storing process.

'If the baseband section 4 checks that the protecting function is set OFF in the step ST1, it shifts the process from the step ST1 to the step ST8, and writes data to be stored into a memory designated as a target without subjecting it to encryption.

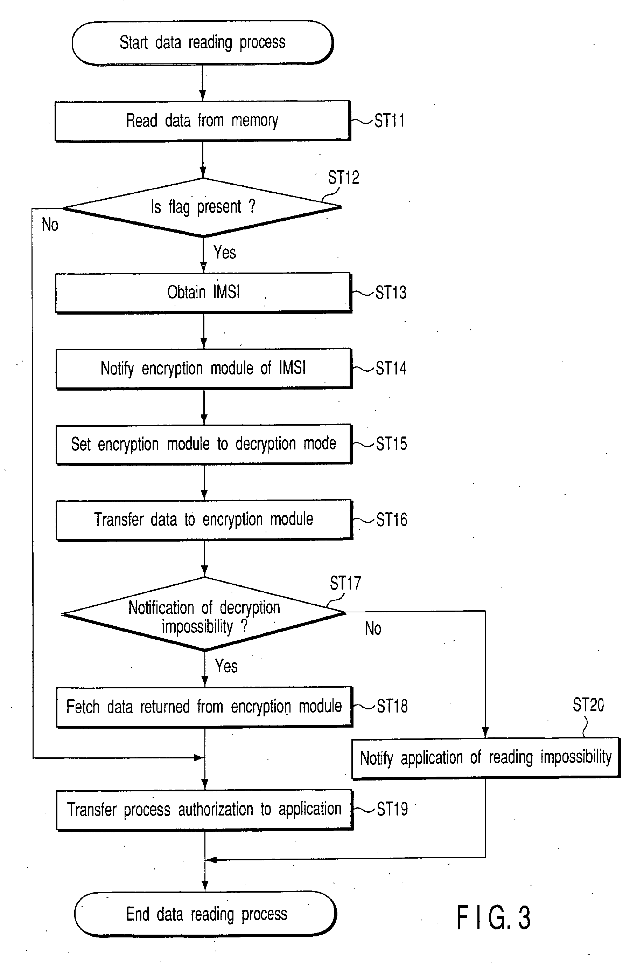

If it is necessary to read data from the memory section 6 or the memory card C2 during execution of an arbitrary application process, the baseband section 4 executes a data reading process shown in FIG. 3 as another task process.

In a step ST11, the baseband section 4 reads data to be read from a memory designated as a target. In a step ST12, the baseband section 4 checks whether a flag representing that the data is encrypted is added to the read data.

If the baseband section 4 checks that the flag is added, it obtains IMSI from the SIM card C1 in a step ST13. Subsequently, the baseband section 4 notifies the encryption module 21 of the obtained IMSI in a step ST14. Then, the baseband section 4 sets the encryption module 21 to a decryption mode in a step ST15. In a step ST16, the baseband section 4 transfers data to be stored to the encryption module 21.

When the decryption mode is set, the encryption module 21 attempts to decrypt the encrypted data transferred from the baseband section 4 using as a key the IMSI, which has been notified of by the baseband section 4. If the encryption module 21 normally completes decryption, it returns the decrypted data to the baseband section 4. If the encryption module 21 fails to decrypt data, it notifies the baseband section 4 that decryption is impossible.

Then, the baseband section 4 checks in a step ST17 whether a notification of decryption impossibility is supplied from the encryption module 21. If data is returned from the encryption module 21 without a notification of decryption impossibility, the baseband section 4 fetches the data in a step ST18.
Subsequently, in a step ST19, the baseband section 4 transfers process authorization relating to the data fetched in the step ST18 to the application, and thus ends the data reading process.

If it is checked in the step ST17 that the notification of decryption impossibility is supplied, the baseband section 4 notifies the application in a step ST20 that the reading is impossible and ends the data reading process.

If it is checked in the step ST12 that the flag is not added, the baseband section 4 transfers process authorization relating to the data read in the step ST11 to the application in the step ST19, and ends the data reading process.

As described above, according to the first embodiment, when data is to be stored in the memory section 6 or the memory card C2, if the protecting function is set ON, encrypted data is stored. At this time, the IMSI stored in the inserted SIM card C1 is used as an encryption key. When data is to be read from the memory section 6 or the memory card C2, if the data is encrypted, decryption of the encrypted data is attempted using the IMSI stored in the inserted SIM card C1 as a key.

Therefore, the data stored with the protecting function ON can be read properly only in the state where the SIM card C1 used when storing data is inserted in the mobile telephone. As a result, even if the mobile telephone of the first embodiment is shared by a plurality of users using different SIM cards, the data stored in the memory section 6 or the memory card C2 can be protected so as not to be read by another user.

In the first embodiment, IMSI is used as a key. Since the user therefore does not need to designate a key, he or she is not additionally burdened.

### (Second Embodiment)

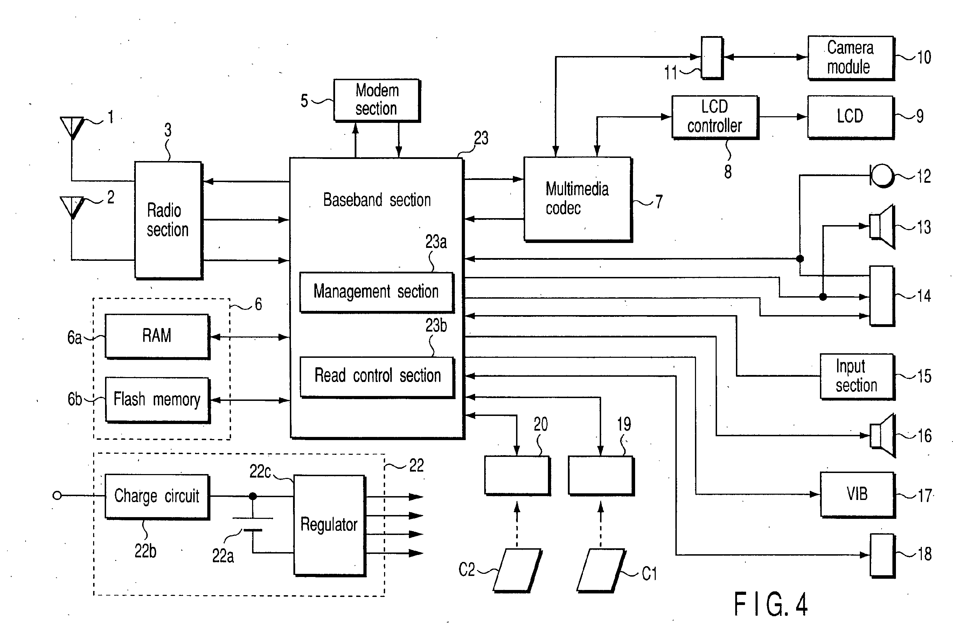

FIG. 4 is a block diagram of a mobile telephone according to a second embodiment of the present invention. The same portions as those of the first embodiment are identified by the same reference numerals, and the description thereof is omitted.

As shown in FIG. 4, the mobile telephone of the first embodiment comprises a main antenna 1, a sub-antenna 2, a radio section 3, a modem section 5, a memory section 6, a multimedia codec 7, an LCD controller 8, an LCD 9, a camera module 10, a camera interface connector 11, a microphone 12, a receiver 13, a stereo headset jack 14, an input section 15, a sounder 16, a vibrator 17, a USB interface connector 18, a SIM card connector 19, a memory card connector 20, a power source section 22 and a baseband section 23.

Thus, the mobile telephone of the second embodiment has the baseband section 23 in place of the baseband section 4 of the mobile telephone of the first embodiment.

The baseband section 23 is formed of an LSI. The baseband section 23 has a function for performing base band signal processing with respect to the transmission signals supplied to the radio section 3 and the reception signals supplied from the radio section 3. The baseband section 23 also has a function for performing control processing, such as communication control and peripheral circuit control. It also has a function of performing voice encoding and decoding. The baseband section 23 operates as a management section 23a and a read control section 23b, not only as a control section for carrying out a control process to implement known general functions in a mobile telephone, such as a voice transmitting function.

The management section 23a manages a folder set in the memory section 6 and the memory card C2 in association with IMSI. The read control section 23b performs a data reading process (to be described later) to read data from the memory section 6 or the memory card C2.

An operation of the mobile telephone having the above structure will now be described. Since the process to implement known general functions in a mobile telephone, such as a voice transmitting function, is the same as the conventional process, the description thereof is omitted. In the following, an operation concerning access to memory section 6 and the memory card C2 will be described in detail.

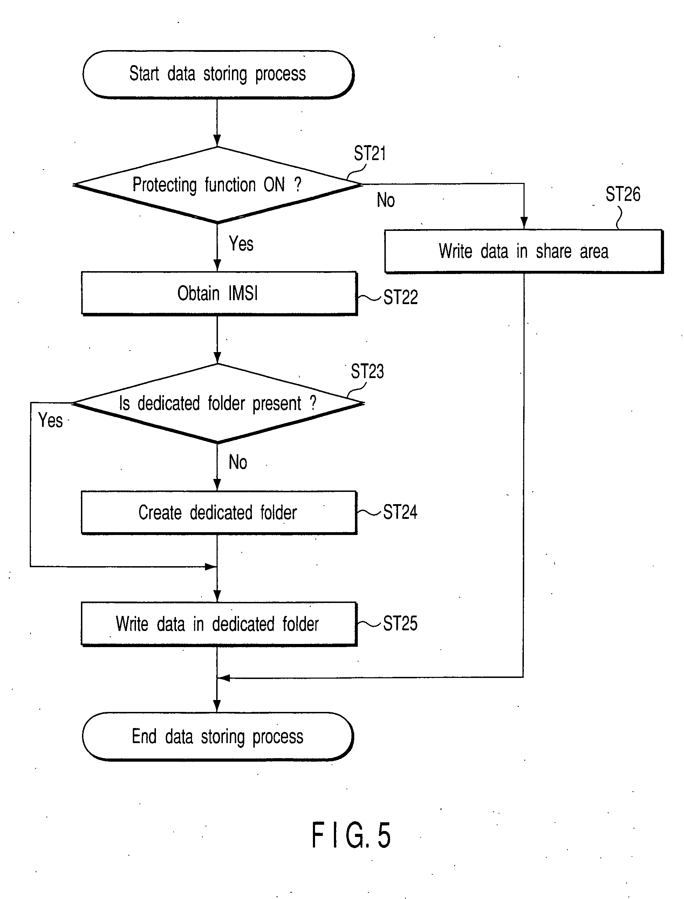

If it is necessary to store data in the memory section 6 and the memory card C2 during execution of an arbitrary application process, the baseband section 23 executes a data storing process shown in FIG. 5 as another task process.

In a step ST21, the baseband section 23 checks whether a protecting function is set ON. If the baseband section 23 checks that the protecting function is set ON,' it obtains IMSI from the SIM card C1 in a step ST22.

Subsequently, in a step ST23, the baseband section 23 checks whether the dedicated folder associated with the obtained IMSI is present in a memory designated as a target. If the baseband section 23 checks that the associated dedicated folder is not present, it creates a dedicated folder in a step ST24. If the baseband section 23 checks in the step ST23 that the associated dedicated folder is present, it passes the process of the step ST24.

In a step ST25, the baseband section 23 writes the data to be stored into the dedicated folder created in the step ST24 or the existing dedicated folder. When the writing of the data is completed, the baseband section 23 ends the data storing process.

If the baseband section 23 checks that the protecting function is set OFF in the step ST21, it writes, in a step ST26, data to be stored into a share area, which does not belong to the dedicated folder, in the designated target memory. When the writing of the data is completed, the baseband section 23 ends the data storing process.

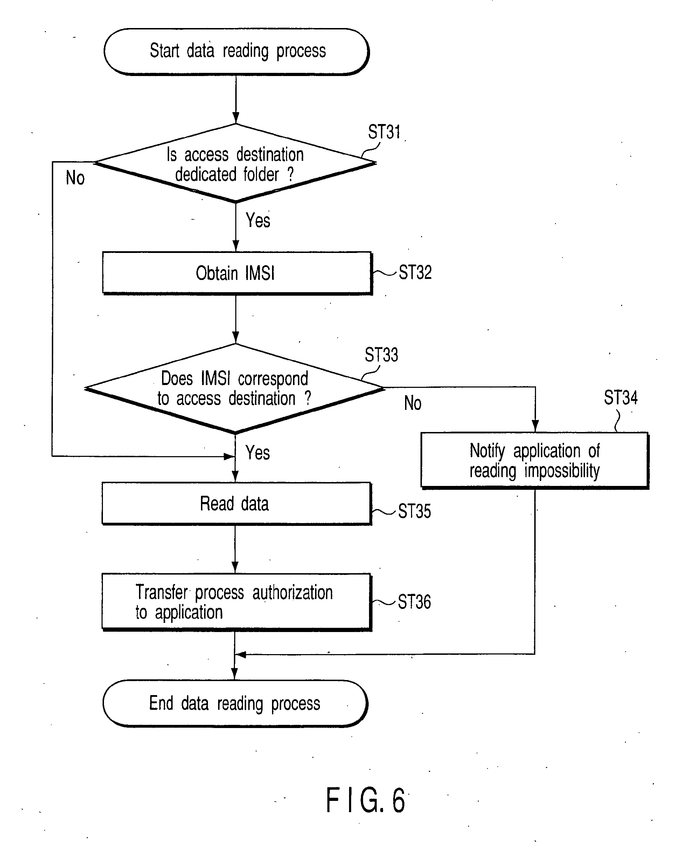

If it is necessary to read data from the memory section 6 or the memory card C2 during execution of an arbitrary application process, the baseband section 23 executes a data reading process shown in FIG. 6 as another task process..

In a step ST31, the baseband section 23 checks whether data to be read is stored in a dedicated folder. In other words, it checks whether the access destination is a dedicated folder.

If the access destination is a dedicated folder, the baseband section 23 obtains IMSI from the SIM card C1 in a step ST32. Then, in a step ST33, the baseband section 23 checks whether the obtained IMSI is associated with the dedicated folder of the access destination.

If the IMSI is not associated with the dedicated folder, the baseband section 23 notifies the application in a step ST34 that the reading is impossible and ends the data reading process.

If it is checked that the access destination is not a dedicated folder in the step ST31 or that the IMSI is associated with the dedicated folder in the step ST33, the baseband section 23 reads data to be read in a step ST35. Subsequently, in a step ST36, the baseband section 23 transfers process authorization relating to the read data to the application, and ends the data reading process.

As described above, according to the second embodiment, when data is to be stored in the memory section 6 or the memory card C2, if the protecting function is set ON, the data is stored in a dedicated folder associated with the IMSI stored in the inserted SIM card C1. When data is to be read from the memory section 6 or the memory card C2, if the data is stored in a dedicated folder, the data is read only in the case where the IMSI stored in the inserted SIM card C1 is associated with the dedicated folder.

Therefore, the data stored with the protecting function ON can be read properly only in the state where the SIM card C1 that was used when the data was stored is inserted in the mobile telephone. As a result, even if the mobile telephone of this embodiment is shared by a plurality of users using different SIM cards, the data stored in the memory section 6 or the memory card C2 can be protected so as not to be read by another user.

In the second embodiment, IMSI is used to verify a right to access a dedicated folder. Since the user therefore does not need to designate a key, he or she is not additionally burdened.

The present invention is not limited to the above embodiments. For example, in the above embodiments, IMSI is used as specific information stored in the SIM card C1. However, subscriber information, such as a telephone number or an e-mail address, can be used instead.

Alternatively, information that the user arbitrarily designates may be stored in the SIM card C1, so that the information can be used as specific information. In this case, since the same specific information can be stored in a plurality of SIM cards C1, only the limited users who have the SIM cards can share the data.

In the above embodiments, the SIM card C1 is used as an external storage medium. However, another medium, such as an USIM card, can be used instead.

Further, in the above embodiments, the present invention is applied to a mobile telephone as an example of mobile communication terminals. However, the present invention can be applied to another kind of mobile communication terminal.

Furthermore, in the above embodiments, only the IMSI stored in the SIM card C1 can be used as specific information. However, information obtained by combining, for example, the IMSI with the intrinsic number of a mobile telephone, may be used as encryption or folder management. As for encryption, the IMSI and the intrinsic number of the mobile telephone may be individually used, so that data can be encrypted in stages. With these features, data can be prevented from being transferred to and accessed by another terminal.

Moreover, according to the second embodiment, IMSI is associated with every folder. However, IMSI may be associated with every data file to manage files. If the mobile communication terminal has a plurality of memory modules, the memory modules may be managed by IMSIs associated with the respective memory modules.

## Claims

1. A mobile communication terminal, to which an external storage medium (C1) storing subscriber information can be arbitrarily attached and which can carry out communication as a terminal of a subscriber corresponding to the subscriber information stored in the attached external memory medium (C1), the mobile communication terminal comprising:
encryption means (21) for encrypting arbitrary information based on specific information stored in the attached external storage medium (C1);
decryption means (21) for decrypting the encrypted information based on the specific information stored in the attached external storage medium (C1);
writing means (4a) for writing the encrypted information in storage means (6, C2) other than the attached external storage medium (C1); and
acquiring means (4b) for acquiring the decrypted information as read-out information read from the storage means (6, C2), the decrypted information being obtained by decrypting the encrypted information stored in the storage means (6, C2).

2. The mobile communication terminal according to claim 1, **characterized in that** the storage means (6) is fixedly incorporated therein.

3. The mobile communication terminal according to claim 1, **characterized in that** intrinsic information individually provided for the attached external storage medium (C1) is used as the specific information.

4. The mobile communication terminal according to claim 1, **characterized in that** the subscriber information is used as the specific information.

5. The mobile communication terminal according to claim 1, **characterized in that** information arbitrarily designated by a user is used as the specific information.

6. A mobile communication terminal, to which an external storage medium (C1) storing subscriber information can be arbitrarily attached and which can carry out communication as a terminal of a subscriber corresponding to the subscriber information stored in the attached external memory medium (C1), the mobile communication terminal comprising:
management means (23a) for managing information stored in storage means (6, C2) other than the attached external storage medium (C1 in association with specific information stored in the attached external storage medium (C1) when the information was written in the storage means (6, C2); and
reading means (23b) for reading from the storage means (6, C2) only the information managed by the management means (23a) in association with the specific information stored in the attached external storage medium (C1).

7. The mobile communication terminal according to claim 6, **characterized in that** the storage means (6) is fixedly incorporated therein.

8. The mobile communication terminal according to claim 6, **characterized in that** intrinsic information individually provided for the attached external storage medium (C1) is used as the specific information.

9. The mobile communication terminal according to claim 6, **characterized in that** the subscriber information is used as the specific information.

10. The mobile communication terminal according to claim 6, **characterized in that** information arbitrarily designated by a user is used as the specific information.
